# EUROPEAN PATENT SPECIFICATION

(11) **EP 1 870 893 B1**
(45) Date of publication and mention of the grant of the patent: **25.12.2013**
(21) Application number: 07111355.9
(22) Date of filing: 03.03.2005
(51) Int. Cl.: G11B 27/32, G11B 20/00, G11B 20/12, G11B 7/007, G11B 20/10, G11B 27/30, G11B 20/18

(54) **Recording medium with status information thereon which changes upon reformatting and apparatus and method for forming, recording, and reproducing the recording medium**
Aufzeichnungsmedium mit Statusinformation darauf, die sich bei Reformatierung ändert, sowie Vorrichtung und Verfahren zur Erzeugung, Aufzeichnung und Wiedergabe des Aufzeichnungsmediums
Support d'enregistrement portant des informations de statut changeant lors du reformatage et appareil et procédé pour former, enregistrer et reproduire le support d'enregistrement

(30) Priority: 19.03.2004 US 554356 P; 07.06.2004 US 577181 P; 02.07.2004 KR 20040051610; 09.07.2004 KR 20040053617
(43) Date of publication of application: 26.12.2007
(62) Divisional of application: 05721901.6
(73) Proprietor: LG Electronics Inc., Seoul 150-721 (KR)
(72) Inventor: Park, Yong Cheol, 427-731, Gyeonggi-do (KR)
(74) Representative: Vossius & Partner

(56) References cited:
- EP-A- 1 505 597
- EP-A- 1 587 102
- EP-A2- 1 600 975
- WO-A-03/030173
- US-A1- 2003 210 627

## Description

### Technical Field

The present invention relates to managing physical access control (PAC) and recording data, media containing PAC and recording data (for example, high density optical discs, such as Blu-ray Disc) and apparatus and methods for recording and/or reproducing data to and/or from the media.

### Background Art

Media, for example, optical discs may be used for recording a large quantity of data. Of the optical discs available, a new high density optical media (HD-DVD), for example, the Blu-ray Disc (hereafter called as "BD") is under development, which enables increased recording and/or storing of high definition video and/or audio data.

BD further includes a rewritable Blu-ray disc (BD-RE), Blu-ray disc writable once (BD-WO), and Blu-ray disc read only (BD-ROM).

Currently, one problem with existing systems is the potential incompatibility between drives of different versions, for example a drive of a previous version with a previous set of capabilities may have difficulty interacting with a medium that has interacted with a drive including at least one capability from a subsequent set of capabilities.

Another problem with existing systems is determining an initialization, re- initialization, formatting, and/or reformatting procedure for physical access control (PAC) information stored on the medium, for example, a rewritable Blu-ray disc (BD-RE).

US 2003/210627 A1 relates to recording digital information signals on a recording medium. It describes a Defect Management system based on a Main Defect Table. Further reference is made to EP-A-1 505 597 (document under Art. 54(3)EPC). The invention is specified in the claims.

The present invention provides a PAC on a medium, such as a high density optical disc, and apparatus and methods for recording data to and reproducing data from the medium using the PAC may be initialized, re-initialized, formatted, and/or reformatted.

It is to be understood that both the foregoing general description and the following detailed description of the present invention are exemplary and explanatory and are intended to provide further explanation of the invention as claimed.

### Brief Description of Drawings

The accompanying drawings, which are included to provide a further understanding of example embodiments of the invention and are incorporated in and constitute a part of this application, illustrate example embodiment(s) of the invention where,
FIGs. 1A and 1B illustrate PAC zones on a high density optical disc in accordance with an example embodiment of the present invention;
FIG. 2 illustrates an INFO2 zone and an INFO1 zone on a high density optical disc in accordance with an example embodiment of the present invention;
FIG 3 illustrates a PAC recorded on a high density optical disc in accordance with an example embodiment of the present invention;
FIG 4 illustrates a PAC on a high density optical disc in accordance with an example embodiment of the present invention;
FIG 5 illustrates an "Unknown PAC Rules" field in accordance with an example embodiment of the present invention;
FIG 6 illustrates a high density optical disc in accordance with an example embodiment of the present invention;
FIG 7 illustrates a Primary PAC zone on a high density optical disc in accordance with an example embodiment of the present invention;
FIG 8 illustrates a PAC zone on a high density optical disc in accordance with an example embodiment of the present invention;
FIG 9 illustrates a DDS on a high density optical disc in accordance with an example embodiment of the present invention;
FIG 10 indicates status information of a PAC zone in accordance with an example embodiment of the present invention;
FIGs. 11A - 11D illustrate structures, each showing a PAC status information field of a DDS which indicates status information of a PAC zone, in accordance with an example embodiment of the present invention;
FIGs. 12A-12B illustrate initializing a PAC in accordance with an example embodiment of the present invention;
FIGs. 13A-13B illustrate initializing a PAC in accordance with another example embodiment of the present invention;
FIGs. 14A-14B illustrate initializing a PAC in accordance with another example embodiment of the present invention;
FIGs. 15A-15B illustrate initializing a PAC in accordance with another example embodiment of the present invention; and
FIG 17 illustrates a block diagram of an optical recording/producing apparatus in accordance with an example embodiment of the present invention.

### Best Mode for Carrying Out the Invention

Reference will now be made in detail to example embodiments of the present invention, illustrated in the accompanying drawings. Wherever possible, the same reference numbers will be used throughout the drawings to refer to the same or like parts.

In an example embodiment, in addition to its ordinary and customary meaning, the term "physical access control (PAC)" may include additional information being recorded on the disc for managing/controlling data recording and reproduction for an entire disc or a specific segment within a physical zone of the disc. The term "physical access control (PAC)" may be referred to as "PAC", "PAC information", and/or "PAC control information" for simplicity.

In addition, a zone within the disc on which the PAC is recorded may be referred to as a "PAC zone" and the PAC being recording in the PAC zone in cluster units may be referred to as a "PAC cluster" for simplicity.

Furthermore, a PAC according to example embodiments of the present invention may include an "unknown rule", which may restrict read/write of data for the entire disc or a specific segment, for a drive having a specifically unknown PAC_ID and including a drive of a previous version (for example, a "legacy" version"). A PAC having an "unknown rule" applied thereto may be referred to as an "Unknown PAC". Similarly, a known specific PAC_ID recorded on the PAC may be referred to as a "known rule" and "PAC specific information" that is applied to the PAC may be referred to as a "Known PAC".

In an example embodiment, a "Known PAC" may be a PAC having information related to a date of disc initialization and information (for example, Recorder ID, if one disc is recorded with many recorders, this may be useful information) on a recorder (which may be an optical disc drive) of each cluster on the disc and may be referred to as a "Primary PAC".

A structure in which the PAC is recorded on the PAC zone, and apparatus and method for recording and reproducing a data by using the same will be described with reference to the attached drawings.

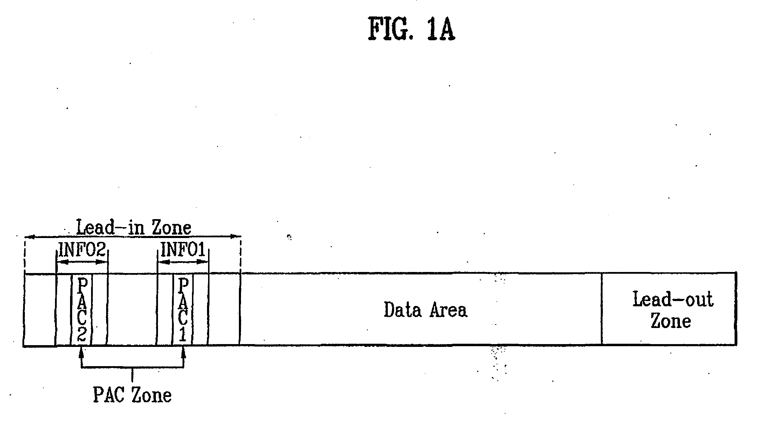

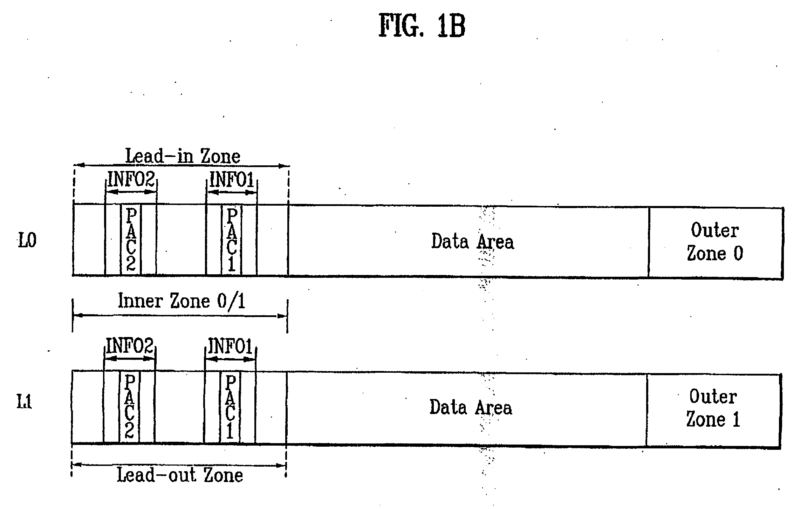

FIGS. 1A or 1B illustrate PAC zones on a high density optical disc in accordance with an example embodiment of the present invention.

Referring to FIG. 1A, the high density optical disc may be partitioned from an inner circumference to an outer circumference, into a lead-in zone, a data zone, and a lead-out zone. The lead-in zone may be further partitioned into an INFO2 zone and an INFO1 zone for recording various kinds of information thereon. The IMFO2 zone and an INFO1 zone may include PAC (Physical Access Control) zones.

For convenience, a PAC zone assigned to the INFO2 zone may be labeled a PAC2 zone and the PAC zone assigned to the INFO1 zone may be labeled a PAC1 zone. One of the PAC2 zone and the PAC1 zone may have an original PAC recorded thereon and the other one may have a back up zone for recording a copy of the original PAC. If a writing direction is from the inner circumference to the outer circumference of the disc, it may be advantageous that the original PAC is recorded on the PACII zone and the backup PAC is recorded on the PACI zone.

FIG. 1B illustrates a diagram of a dual layer disc structure having two recording layers including first recording layer (L0: Layer 0) and second recording layer (L1: Layer 1), wherein each of the recording layers includes a Lead-in/out Zone (also called as an Inner Zone), a Data Area, and an Outer Zone 0, or 1.

Each of the lead-in zone (inner zone 0) and the lead-out zone (inner zone 1) may include an INFO 2 zone and an INFO 1 zone for recording management information of the disc, and the PAC zones may be located in the INFO2 zone and/or the INFO1 zone.

Similar to a single layer disc, a PAC zone assigned to the INF02 zone may be labeled a PAC2 zone and the PAC zone assigned to the INFO1 zone may be labeled a PAC1 zone. One of the PAC2 zone and the PAC1 zone may have an original PAC recorded thereon and the other one may have a back up zone for recording a copy of the original PAC. If a writing direction is from the inner circumference to the outer circumference of the disc, it may be advantageous that the original PAC is recorded on the PACII zone and the backup PAC is recorded on the PACI zone.

In the example shown in FIG 1B, because the PAC1 and PAC2 zones are not only in the lead-in zone, but also in the lead-out zone for the dual layer disc, the dual layer disc has a PAC size two times greater than the single layer disc.

The PAC zone may be provided to handle problems that may occur when an older version of a drive apparatus cannot detect functions on a disc added having functions compatible with a newer version of a drive apparatus. The PAC zone may handle compatibility problems using one or more an "unknown rules".

An "unknown rule" may be used to control predictable operations of the disc, for example, basic control of read, write, etc., linear replacement of a defective zone, logical overwrite, etc. An area may also be provided on the disc, indicating where the "unknown rule" is applicable, for example, segments for defining the entire disc or a certain portion of the disc, which is described later in more detail.

In areas of the disc managed by the "unknown rule", there may be provided a DMA (Disc Management Area), a Spare Area, a User Data Area, and/or other similar areas.

In areas of the disc managed by the "unknown rule", there are a DMA (Disc Management Area), a Spare Area, a User Data Area, and the like, and particularly, with regard to the User Data Area, segment areas which are predetermined areas on the disc the "unknown rule" is applicable thereto can be designated thereto. (The segment will be described in more detail, later.)

That is, by using the "unknown rule", rules and/or other operations for controlling predictable operations of the above areas, such as, starting from basic operations of recording and reproducing, linear replacement of a defective area, logical overwrite of the BD-WO, and/or other similar operations may be defined.

Thus, by defining an area of the disc, an older version drive apparatus is able to access by using the "unknown role", a newer version of the disc reduces unnecessary access operation of the older version drive apparatus.

Moreover, by defining an accessible area on a physical area of the disc for an older version drive apparatus to access by using the PAC, a data area containing user data recorded thereon can be protected more robustly and/or unauthorized access (for example, hacking) of the disc may be prevented or reduced.

The INFO2 zone and the INFO1 zone having the PACII and I zones therein in the lead-in zone may be reviewed in view of writable characteristics of the high density optical disc.

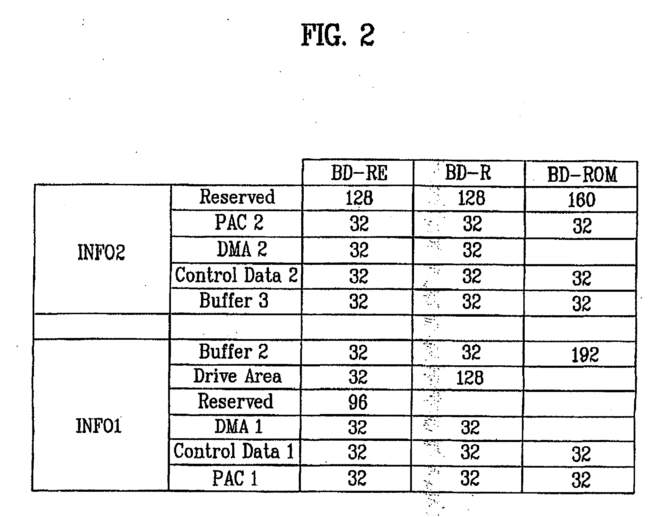

FIG 2 illustrates INFO2 zone and the INFO1 zone on a high density optical disc in accordance with an example embodiment of the present invention.

Referring to FIG 2, for an example BD-RE high density optical disc, the INFO2 zone may have 256 clusters including 32 clusters of PACII zone, 32 clusters of DMA (Defect Management Area) 2 zone for management of defects, 32 clusters of CD (Control Data) 2 zone having control information recorded thereon, and/or 32 clusters of BZ (Buffer Zone) 3 zone of a buffer zone.

The INFO1 zone may include 32 clusters of BZ2 zone of a buffer area, 32 clusters of drive area which may be a drive area for storing information specific to a drive, 32 clusters of DMA1 zone for managing defects, 32 clusters of CD1 zone for recording control information, and/or a BZ1-PACI zone utilizable as the PAC zone.

For a write once high density optical disc (BD-R), the INF02 zone may have 256 clusters including a PACII zone, a DMA 2 zone, a CD 2 zone, and a BZ 3 zone, each with 32 clusters, and the INFO1 zone includes a BZ2 zone, a DMA1 zone, a CD1 zone, and/or a BZ1-PACI zone, each with 32 clusters, and 128 clusters of drive area.

For a read only high density optical disc (BD-ROM), the INFO2 zone may have 256 clusters including a PACII zone, a CD 2 zone, and a BZ 3 zone, each with 32 clusters, and the INFO1 zone 256 clusters including a CD1 zone, and/or a BZ1-PACI zone, each with 32 clusters.

The PAC zones of example embodiments of the present invention may be assigned to the INFO2 zone and/or the INFO1 zone in the lead in zone in 32 clusters each, according to rewritable characteristics of the high density optical disc.

In an example of a dual layer disc having two recording layers, the PAC zone may be designated, not only in the lead-in zone, but also in the lead-out zone, such that one PAC zone may have 64 clusters.

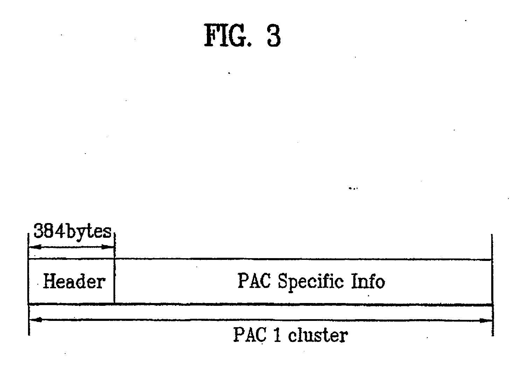

In a PAC zone of 32 clusters (or 64 clusters), one PAC may have one cluster, for recording a plurality of valid PACs. There also may be a plurality of one cluster sized PACs if desired. An example structure in which one PAC is recorded as one cluster is described with reference to FIG 3.

FIG 3 illustrates a diagram of a structure of a PAC recorded on a high density optical disc in accordance with an example embodiment of the present invention.

Referring to FIG. 3, one PAC of one cluster size (32 sectors) may include a header zone and a specific information zone, specific to a particular disc drive (for example, optical disc drive).

The PAC header zone may have 384 bytes allocated to a first sector of the PAC, for recording various kinds of PAC information, such as information on an "unknown PAC rule" and segments, and another area of the PAC zone may have information specific to the (optical) disc drive may be referred to as "known rules" recorded thereon.

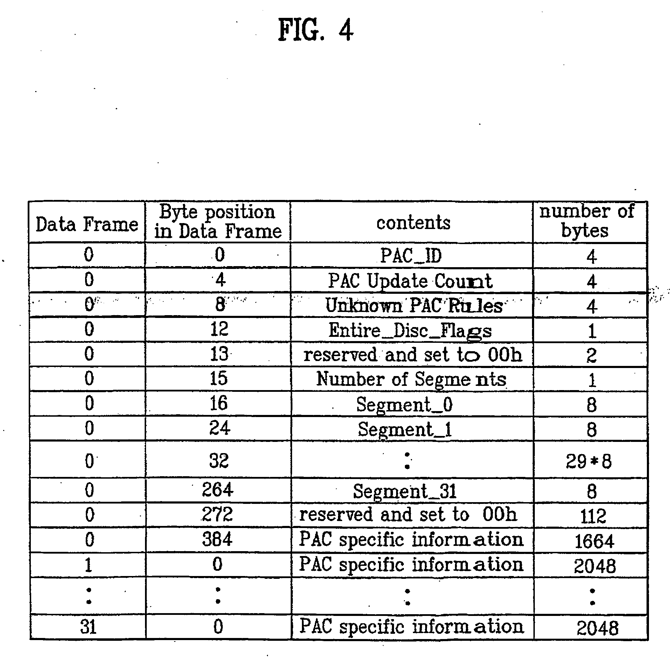

An example structure of a PAC recorded in above structure is described with reference to FIG. 4. For convenience, in the description, particular fields of the PAC that require more detailed description will refer to drawings that illustrate the particular fields.

FIG. 4 illustrates a diagram showing a structure of a PAC on a high density optical disc in accordance with an example embodiment of the present invention.

Referring to FIG. 4, the PAC may include a header portion (in an example, up to 384 bytes of the first frame) applicable to all PACs and an area having information specific to the drive, recorded thereon.

An example header portion may include 4 bytes of "PAC_ID", 4 bytes of "Unknown PAC Rules", 1 byte of "Entire Disc Flag", 1 byte of "Number of Segments", and/or 32 segments "Segment_0 ~ Segment_31" each with 8 bytes.

The "PAC_ID'" may provide the present PAC status and identification codes, for example, if the "PAC_ID" is '00 00 00 00h' , the "PAC_ID" may indicate that the present PAC is not used, and if the "PAC_ID" is 'FF FF FF FFh', the "PAC_ID" may indicate that the present PAC zone is available for use again even if the PAC zone has been used previously.

By recording the "PAC_ID" in predetermined bits, such as '54 53 54 0Oh', the "PAC_ID" is used as a code for determining if the disc is one that the present drive can make free access. That is, if the present drive does not know the "PAC_ID" applied thus, determining that this is a case when the present drive can not understand the present PAC under a reason of version mismatch, or the like, the '54 53 54 00h' is used as code requiring to refer to information recorded on the "Unknown PAC Rules" field.

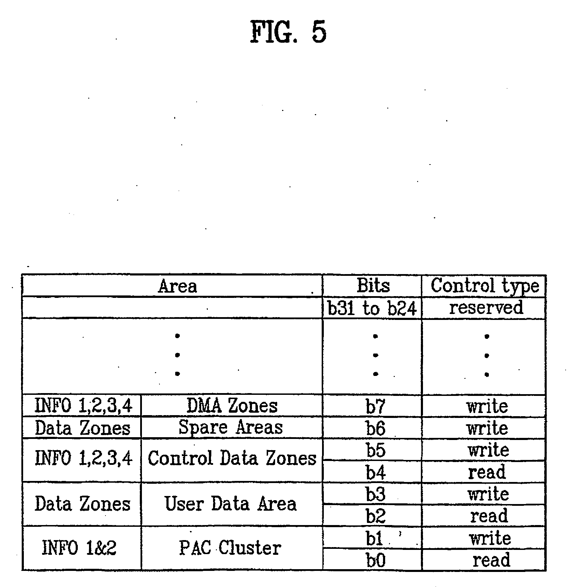

As described, the "Unknown PAC Rules" field may be used as a field that designates an operation range of a drive that can not recognize the present PAC, which will be described further with reference to FIG. 5.

FIG. 5 illustrates a diagram showing a configuration of an "Unknown PAC Rules" field in accordance with an example embodiment of the present invention.

Referring to FIG. 5, a degree of controllability of various areas on the disc may be enabled by the "Unknown PAC Rules", In this example, the "Area" column in Fig. 5 represents the controllable areas on the disc, the "Control" column represents control types, such as read/write etc., and "Number of bits" column represents a number of bits required for control. The additional bits in the "Number of bits" column may represent cases of dual layer disc with two recording/reproduction sides,

Referring to FIG 5, a degree of controllability of various areas on the disc may be enabled by the "Unknown PAC Rules". In this example, the "Area" column in Fig. 5 represents the controllable areas on the disc, the "Control" column represents control types, such as read/write etc., and "Number of bits" column represents a number of bits required for control. The additional bits in the "Number of bits" column may represent cases of dual layer disc with two recording/reproduction sides.

"Unknown PAC Rules" may be used to control a number of areas on a disc. For example, "Unknown PAC Rules" can indicate recording controllability on Disc Management Area (DMA) zones ( which may or may not include a Disc Definition Structure (DDS) in the INFO 1, 2, 3 and/or 4 zone, can indicate recording controllability on the Spare Areas in the Data Zone, can indicate recording and/or reproducing controllability on the Control Data (CD) Zone in the INFO1, 2, 3, and/or 4 zones, can indicate recording and/or reproducing controllability on the User Data Area in the Data Zone, and/or can indicate recording and/or reproducing controllability on the "PAC cluster" in the INFO1 and/or 2 zone.

The following example rule may be applicable to areas (except the "PAC cluster" area). In the case where the control type is write, for example, for Bits = b3, b5, b6, b7, etc., if an allocated bit is set to '0', this may be used to indicate an area relevant thereto is writable and if an allocated bit is set to '1', this may be used to indicate an area relevant thereto is not writable.

In the case where the control type is read, for example, for Bits = b2, b4, etc., if an allocated bit is set to '0', this may be used to indicate an area relevant thereto is readable, and if an allocated bit is set to '1', this may be used to indicate an area relevant thereto is not readable.

With regard to the "PAC cluster" zone, in a case where the control type is write (Bits = b1) and if an allocated bit is '0', this may be used to indicate that overwrite on the present PAC is possible or status bits of a Disc Definition Structure (DDS) is changeable, If an allocated bit is '1', this may be used to indicate overwrite on the present PAC is not possible or status bits of the DDS are not changeable. The DDS will be described in more detail below.

Also, with regard to the "PAC cluster" zone, in a case where the control type is read (Bits = b0), and if an allocated bit is '0', this may be used to indicate that the "PAC cluster" zone is readable and contents of the present cluster are transferable externally (for example, to a host or other similar device) of a drive. If the allocated bit is '1', this may be used to indicate that contents (so called known rule) of the present PAC cluster are not transferable except the first 384 bytes (a header) of a first data frame, which is settable only when it is intended to control the disc by an unknown rule,

In an example of the User Data Area, if a segment area which is a "special" area on the disc (which is described below) is defined, the User Data Area may be used as a field for indicating recording and/or reproducing controllability on the segment area, and not necessarily the entire User Data Area. '

Write controllability is applicable only to re-writable discs BD-RE and BD-R and the write controllability of a replacement area for a defective area is also applicable to the re-writable discs BD-RE and BD-R. As a result, various example futures of the present invention may depend on the re-writable characteristics of the high density (optical) disc.

Using the above technique, the "Unknown PAC Rules" field enables designation of a controllable area on the disc for a drive with a version mismatch. Moreover, the above technique may also be applicable to control access to a particular physical area on a disc at a user's option.

Returning to Fig. 4, the "PAC Update Count" field in FIG. 4, may indicate a number of the PAC updates, may have '0' written initially, and/or may be incremented by one every time the PAC is re-written.

Further, in Fig. 4, the "Entire Disc Flag" field may be used as a field for indicating that the PAC is applicable to an entire area of the disc and the "Number of Segments" field is a field that may represent a number of segment areas to which the PAC is applicable.

In an example, even in the case of b0 = 0 when re-initialization is allowed, if writing is not allowed by another write inhibition mechanism (for an example, a write protect (WP) flag of DDS), the initialization is inhibited. That is, the "Entire Disc Flag" may be operative in an OR-function with other write inhibition mechanisms.

The "Entire Disc Flag" field can be used as a field applicable, not only to a case of an "unknown PAC, but also to a case of a known PAC. That is, allowability of re-initialization of even a known PAC which understands the PAC_ID enabling to apply the known rule may be controlled through the "Entire Disc Flag" field.

In another example, without providing the "Entire Disc Flag" field as described above, it may also be possible that the allowability of re-initialization may be indicated with one extra bit (for example, of the 32 bits of the "Unknown PAC Rule" field) as a "re-initialization flag" for indicating the allowability of re-initialization.

Moreover, it should be apparent that functions of the "Entire Disc Flag" field are not limited to flag named as such. As is clear, the function of the "Entire Disc Flag" field is applicable to the re-initialization of a PAC, and the field may be identified as a "Initialization bit of PAC" field.

Further, in Fig. 4, the "Number of Segments" field is a field that may represent a number of segment areas to which the PAC is applicable.

In an example embodiment, a maximum number of segments may be allocatable to one PAC. In an example embodiment, a maximum number of 32 segments can be allocated to one PAC and information on the allocated segments may be written in "Segment_0" to "Segment_31" fields, each including 8 bytes. Each of the "Segment_0∼31" fields may include the first physical sector number (PSN) and the last PSN of the allocated segment area recorded thereon.

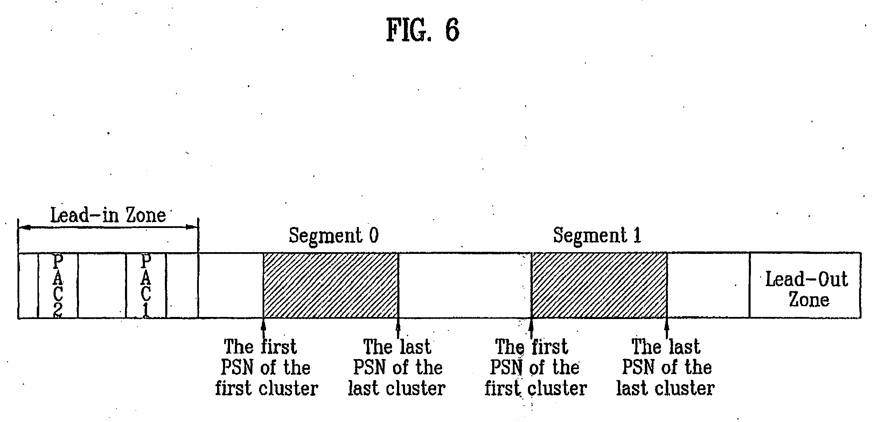

Segments are described in more detail below. FIG 6 illustrates segment zones on a high density optical disc in accordance with an example embodiment of the present invention.

Referring to FIG 6, if required, there may be a maximum number (for example, 32) of segment areas on the high density optical disc, for applying the PAC thereto. The maximum number of segment area may start from "segment 0".

Up to the maximum number of segments can be allocated starting from "segment 0" in an ascending order for management by one PAC, and even if there are a plurality of PACs, total number of the segment areas managed by the PACs should not exceed the maximum number of segments.

In an example, positions of the segment areas may be identified by an optical disc drive by writing the first PSN, which may indicate a starting position of the allocated segment area and the last PSN which may indicate the last position of the allocated segment area on "Segment" fields.

In an example arrangement, none of the plurality of allocated segments need overlap and the starting and ending positions may be designated at boundaries of clusters.

Thus, in example embodiments, the present invention may provide a plurality of PACs, to manage a number (for example, 32) segment areas, which are described in more detail below.

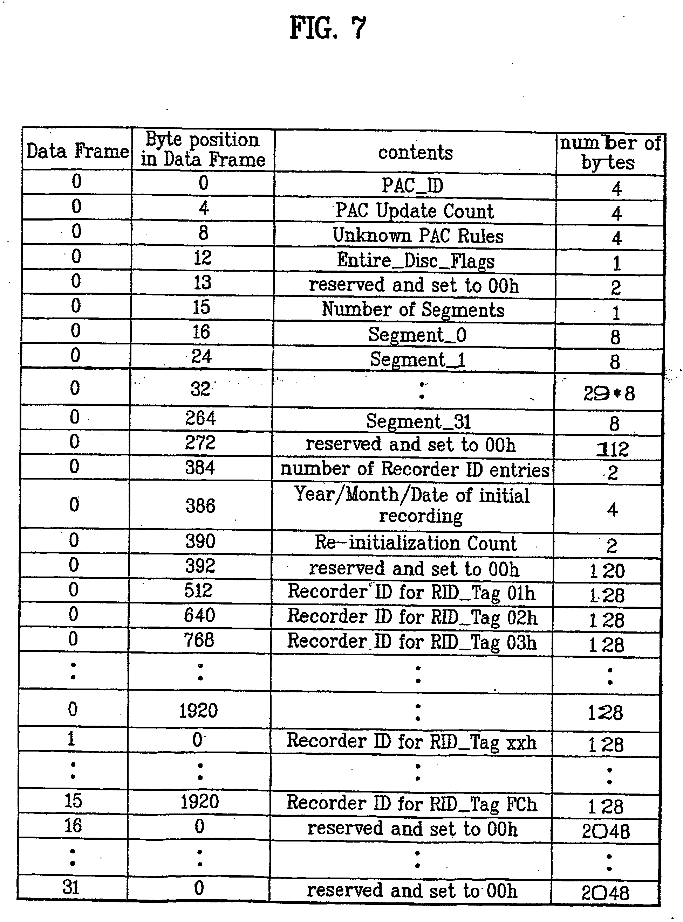

FIG. 7 illustrates a PAC zone on a high density optical disc in accordance with an example embodiment of the present invention.

Referring to FIG. 7, a "Primary PAC" may include 4 bytes of "PAC_ID", 4 bytes of "PAC Update Count", 4 bytes of "Unknown PAC Rules", 1 byte of "Entire_Disc_Flags", 1 byte of "number of Segments", a total of 32 "Segnent_0~ Segment_31" each with 8 bytes, 2 bytes of "number of Recorder ID entries", 4 bytes of ''Year/Month/Date of initial recording", 2 bytes of "Re-initiallization Count", and/or a plurality of "Recorder ID for RID_Tag xxh" fields each with 128 bytes.

The "number of Recorder ID entries", the "Year/Month/Date of initial recording", the "Re-initialization Count", and the "Recorder ID for RIP_Tag xxh" fields of the "Primary PAC" may be referred to as a "known rule", which is PAC specific Info characterizing a "Primary PAC". A "Primary PAC" having such a structure is discussed below.

As described above, the "PAC_ID" field may be used as a field for providing a status and identification code of the present PAC and be recorded in '50 52 4D 00h' for indicating the Primary PAC, specifically. '50 52 4D 00h' represents characters "PRM", and the last 00h bit indicates that a version of the Primary PAC is '0'.

The "PAC Update Count" field may be used to indicate a number of updates of the Primary PAC, may be written as 00h at the time of initialization, and may be incremented by one every time the Primary PAC is re-written.

The "Unknown PAC Rules" field is a field that may be used for designating an operation range of a drive that does not understand the Primary PAC identified by "PAC_ID" having a structure as shown in FIG 5, and may be set to control the DMA area, the spare area, the control data area, the user data area, the PAC cluster area, and/or other similar data.

The "Entire_Disc_Flags" field of the Primary PAC may be set to 00h for allowing initialization, and, if no segment area is allocated, the "number of Segments" field, and the "Segment_i' fields may be set to 00h.

The "number of Recorder ID entries" field is a field that may be used to indicate a number of recorder IDs of 128 byte size and/or a maximum allowable number in the Primary PAC of 252.

The "Year/Month/Date of initial recording" field is a field that may be used for recording a Year, a Month, and a date of initial recording of the disc thereon and the "Re-initialization Count" field is a field that may be used for indicating a number of re-initialization of the disc.

The "Recorder ID for RID_Tag xxh" field is a field having 128 bytes allocated thereto that may be used for recorder ID information for recording drive signatures of all recorders thereon. The 128 bytes of drive signature may include 48 bytes of a manufacturer's name, 48 bytes of additional identification information, and/or 32 bytes of serial number.

In another example, there may be a plurality of PACs, so that the plurality of PACs manage the entire disc or segment areas which can be allocated up to a maximum (for example, 32), which will be described in more detail below.

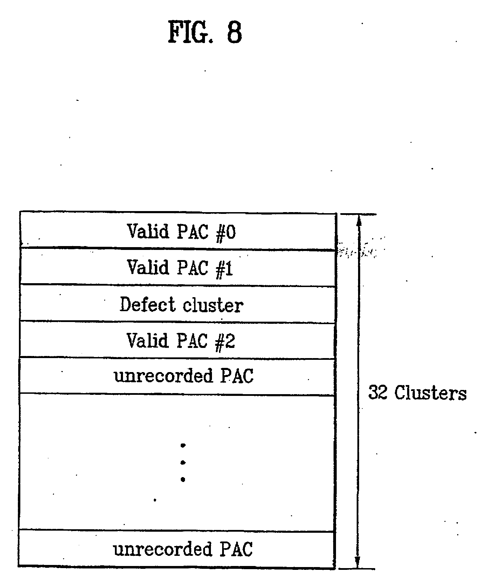

FIG 8 illustrates a PAC zone on a high density optical disc in accordance with an example embodiment of the present invention.

Referring to FIG 8, a plurality of valid PACs, each of the same cluster size, may be written on one PAC zone (a PAC zone of INFO2 or INFO1), each with 32 clusters.

As described above, a valid PAC may be defined as a zone containing the various kinds of PAC information and a maximum number (for example, 32, or 64 in the case of a dual layer disc) of valid PACs may be provided on a disc, each with one cluster size that can be allocated to one PAC zone.

As described above, the valid PAC may have a PAC_ID (for example, PAC_ID = 54 53 54 00h) selected in advance according to a drive version of the optical disc having the PAC recorded thereon, and a remainder of the PAC zone may have a PAC of FF FF FF FFh recorded thereon if the PAC_ID is 00 00 00 00h, and the PAC zone not recorded yet is still an unrecorded PAC zone.

A remainder of the PAC zone having no valid PACs recorded thereon may have a PAC with a PAC_ID of 00 00 00 00h or FF FF FF FFh, and a PAC zone having nothing record thereon may be left as an unrecorded PAC.

In an example embodiment, if a defect occurs at one PAC zone the PAC is to be written thereon, the PAC may be written at an area next to the defective area. The defect may be caused by damage to, or contamination of a disc surface, and when the defect occurs at the area the PAC is to be written thereon, the PAC information may be written on an area next to the defective area.

Operations such as finding a position of a valid PAC zone from the PAC zone or finding a position of a next writable PAC zone while avoiding an area written already to require no more writing, and defective area from above PAC zone may an important matter in view of initialization and recording speed of the disc and many retries may be required for reading a defective area.

In an example embodiment, the present invention describes a method in which status information on positions of the plurality of valid PACs, a position of the next writable PAC, and/or other relevant information may be written on a DDS (Disc Definition Structure).

A DDS may be a zone containing information on the first PSN of a defect list, a position of a user data zone, sizes of spare areas, and/or other relevant information, and may be information written on the DMA zone of the disc as information on DMS (Defect Management Structure) together with DFL (Defect List).

The information written in the DMA may be information scanned and pre-loaded in advance when the disc is loaded into a drive. Therefore, once various status information on the PAC, such as positions of the plurality of valid PACs, a position of the next writable PAC, and/or other relevant information is written in the DDS as pointers, the optical disc drive may obtain information on the PAC zone without needing to scan all the PAC zones.

A DDS may include various kinds of information on status of the PAC zone and will be described below.

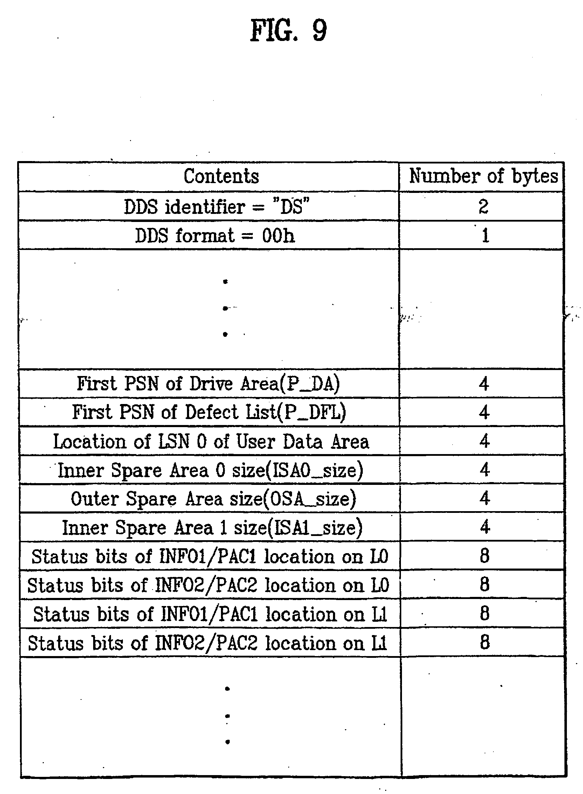

FIG 9 illustrates a DDS on a high density optical disc in accordance with an example embodiment of the present invention.

FIG 9 illustrates a diagram showing an example embodiment of a DDS on a high density optical disc in accordance with an example embodiment of the present invention. The example embodiment of FIG 9 illustrates a dual layer disc, but the teachings of FIG 9 are equally applicable to a single layer disc.

Referring to FIG. 9, the DDS may include a "DDS identifier" field, a "DDS format" field, a "First PSN of Drive Area (P_DA)" field representing the first physical sector number of a drive area, a "First PSN of Defect List (P_DFL)" field representing the first PSN of the defect list, a "Location of LSN 0 of User Data Area" field representing a position of an LSN (logical sector number) of the user data area, an "Inner Spare Area 0 size (ISA0__size)" field representing a size of an inner spare area 0, an "Outer Spare Area size (OSA_size)" field representing a size of an outer spare area 0, an "Inner Spare Area 1_size (ISA1_size)" field representing a size of an inner spare area 1, a "Status bits of INFO1/PAC1 location on L0" field having status information on the PAC1 in the INFO1 zone of the first recording layer L0 recorded thereon, a "Status bits of INFO2/PAC2 location on L0" field having status information on the PAC2 in the INFO2 zone of the first recording layer L0 recorded thereon, a "Status bits of INFO1/PAC1 location on L1" field having status information on the PAC1 in the INFO1 zone of the second recording layer L1 recorded thereon, and/or a "Status bits of INFO2/PAC2 location on L1" field having status information on the PAC2 in the INFO2 zone of the second recording layer L1 recorded thereon.

As indicated in the above example, the DDS may provide various status information on the PAC, such as a position of cluster having valid PAC allocated thereto, the next writable area, and/or other similar information.

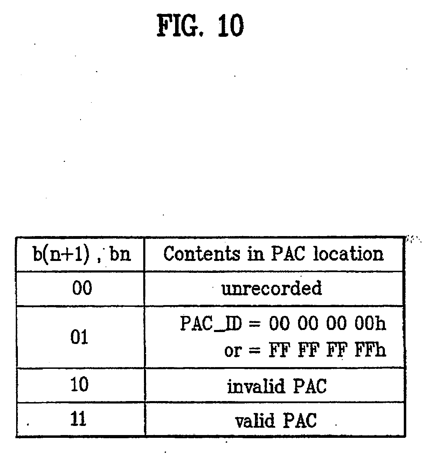

An example of PAC status information of a PAC zone in accordance with an example embodiment of the present invention is described in more detail with reference to FIG 10.

Referring to FIG. 10, two bits (for example) may be allocated to each field provided for indicating status information of the PAC zone recorded on the DDS. In the example of FIG. 10, 00 indicates that the PAC cluster is unrecorded, 01 indicates that the PAC cluster has a PAC with a PAC_ID = 00 00 00 00h, or PAC_ID = FF FF FF FFh recorded thereon, 10 indicates that the PAC cluster is an invalid PAC (for example, due to a defect), and 11 indicates that the PAC cluster is a valid PAC.

A defect is not the only reason a PAC cluster may be identified as invalid. For example, when the PAC cluster is not readable due to "Unknown PAC Rules" too, the PAC cluster may also be identified as an invalid PAC, with 10. That is, as described above, the bit b0 of "Unknown PAC Rule" may be used as a bit for indicating if the PAC cluster is readable, wherein even if the PAC cluster is re-writable in a case where the bit is set to 1, the PAC cluster is indicated as an invalid PAC.

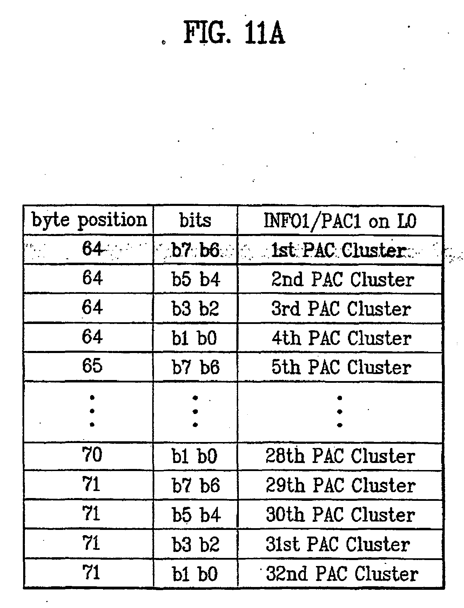

Another example of PAC status information of a PAC zone in accordance with an example embodiment of the present invention is described in more detail with reference to FIGs. 11A - 11 D, which each illustrate structures showing a PAC status information field of a DDS which indicate status information of a PAC zone

FIG 11A illustrates a structure of "Status bits of INF01/PAC1 location on L0" field for indicating status information of the PAC1 zone designated to the INF01 zone of the first recording layer L0.

Referring to FIG 11A, the "Status bits of INFO1/PAC1 location on L0" field may have a total 8 bytes (64 bits) allocated thereto starting from a byte position of 64 (for example) to a byte position of 71 (for example), wherein by indicating status information with two bits for each of PAC clusters, information on a total number (for example, 32) of PAC clusters may be indicated.

Accordingly, for example, if bits b7 - b6 are 11 at a 64 byte position, this may be used to indicate that the first PAC cluster in the PAC1 zone on the first recording layer has a valid PAC, Also, if bits b5- b4 are 01 at a 64 byte position (for example), this may be used to indicate that the second PAC cluster in the PAC1 zone on the first recording layer has a PAC_ID = 00 00 00 00h or PAC_ID = FF FF FF FFh, indicating that the PAC cluster has a writable PAC.

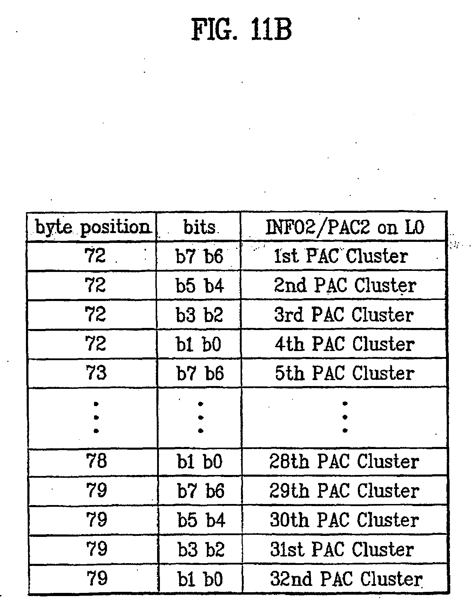

Also, the "Status bits of INFO2/PAC2 location on L0" field may be recorded by the same method for the PAC2 zone on the INFO2 zone on the first recording layer, which is shown in FIG. 11B.

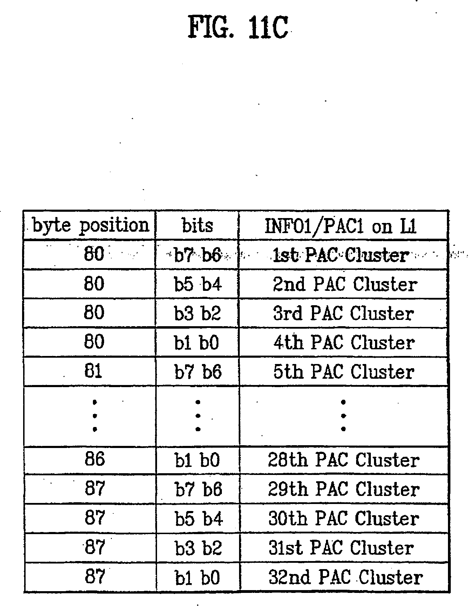

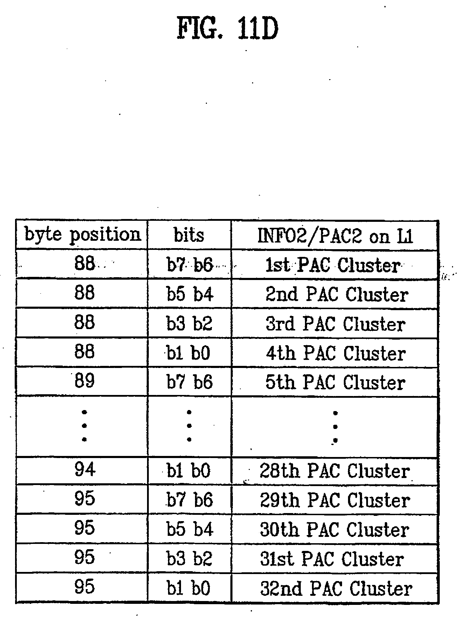

FIG 11C illustrates an example structure of a "Status bits of NFO1/PAC1 location on L1" field having status information on a PAC1 in the INFO1 zone of the second recording layer L1, and FIG. 11D an example structure of a "Status bits of INFO2/PAC2 location on L1" field having status information on a PAC2 in the INFO2 zone of the second recording layer L1, wherein information on the PAC cluster is indicated as described above.

In example embodiment, characteristics of a PAC of the present invention can be summarized as follows.

In valid PACs, there may be "Unknown PAC" and "Known PAC" depending on whether the valid PAC understands a PAC_ID, or not, wherein the "Unknown PAC" has recording and/or reproducing control information on certain areas on the disc (for example, the DMA area, the spare area, the user data area, the PAC cluster, and/or other similar areas). The recording and/or reproducing control information on the user data area may be used as recording and/or reproducing control information on the segment area, if the segments are allocated to the user data area.

The "Known PAC" may include specific information, specific to the PAC, and a "Primary PAC" may be defined as a type of "Known PAC", having disc initialization date information, recorder ID information, and/or other similar information.

A PAC zone may have a plurality of valid PACs designated thereto and the status of various PAC of the PAC zone may be recorded in a DDS.

Initialization of a re-writable high density optical disc (BD-RE) is likely Disc initialization and preparation for using the disc again may include formatting a DMS area and a PAC and scanning and certifying to update Defect List (DFL) information. Because updating the DFL information is an option, initialization as defined in the present invention may also include formatting or reformatting.

Initialization of a re-writable high density optical disc (for example, BD-RE) as defined in the present invention is intended to include re-initialization, formatting, and ref-formatting.

For the initialization of a re-writable high density optical disc (for example, BD-RE), it may be necessary to first verify if an inserted disc can be initialized. Verification of whether the disc can be initialized can be made using the "Entire disc Flags" field (which may also be termed an "initialization bit of PAC") and/or a disc recording inhibition mechanism (for an example, a write protect (WP_flag) of a DDS). In an example, if a bit, b0 of the "Entire disc Flags" field is set (for example, to '1') or if the recording inhibition mechanism inhibits the recording on the disc, initialization is not permitted.

In a case where the "Entire disc Flags" field that indicates if the initialization is allowed or not is applicable to a "Known PAC", the "Known PAC" can be initialized if the "Entire disc Flags" field allows initialization.

In a case where the disc is controlled by an unknown PAC, initialization may not be possible if the "Unknown PAC Rule" inhibits recording on a data zone.

In a case where a disc can be initialized, various, example embodiments for initializing (or reinitializing, formatting, or re-formatting) a high density optical disc according to example embodiments of the present invention are described below.

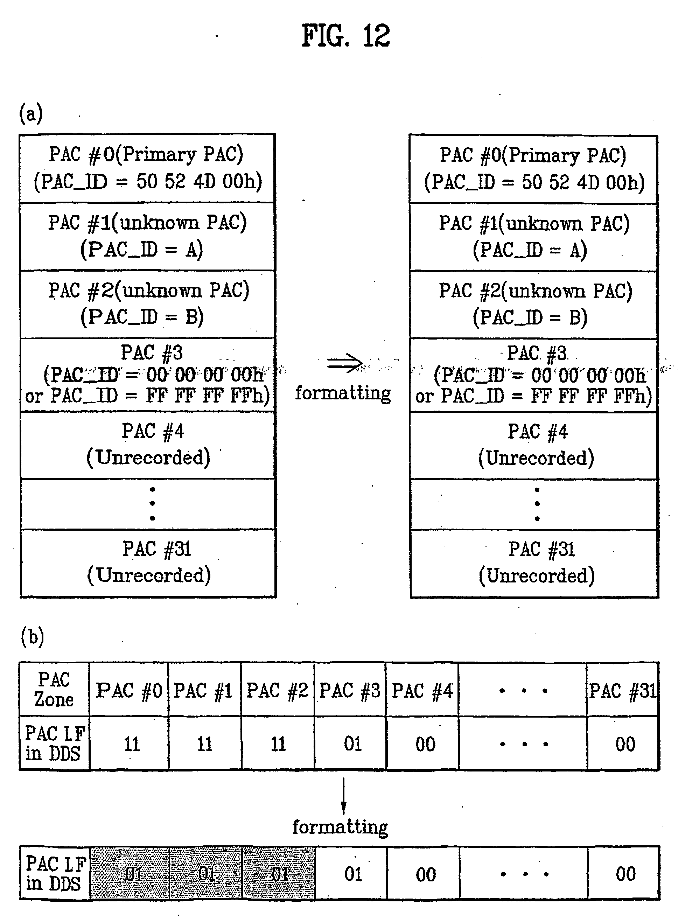

FIGs. 12A-12B illustrate a technique for initializing a PAC in accordance with an example embodiment of the present invention, wherein FIG. 12A illustrates changes of the PAC zone following initialization of the PAC and FIG. 12B illustrates a technique for recording in a DDS area, PAC related status information following initialization of the PAC.

Referring to FIGS. 12A and 12B, in an example initialization method, the PAC zone is left as is, and only the DDS PAC related status information is changed.

That is, as shown in FIG 12B, only DDS information that represents status information on the PAC zone is changed to a next writable state. For an example, bits 11 that indicate position information of the valid PAC are changed to bits 01 to indicate that a PAC zone is a next writable PAC zone, and bits 01 or bits 00 that indicate an original writable area is maintained as is.

Without separate initialization of the PAC zone, this example technique enables a comparatively simple PAC zone initialization process by changing only the DDS information to identify an entire PAC zone as a writable area. A method of initialization by DDS information change, without physical initialization of the PAC zone, such as the example described above, may be referred to as logical initialization (or a logical format).

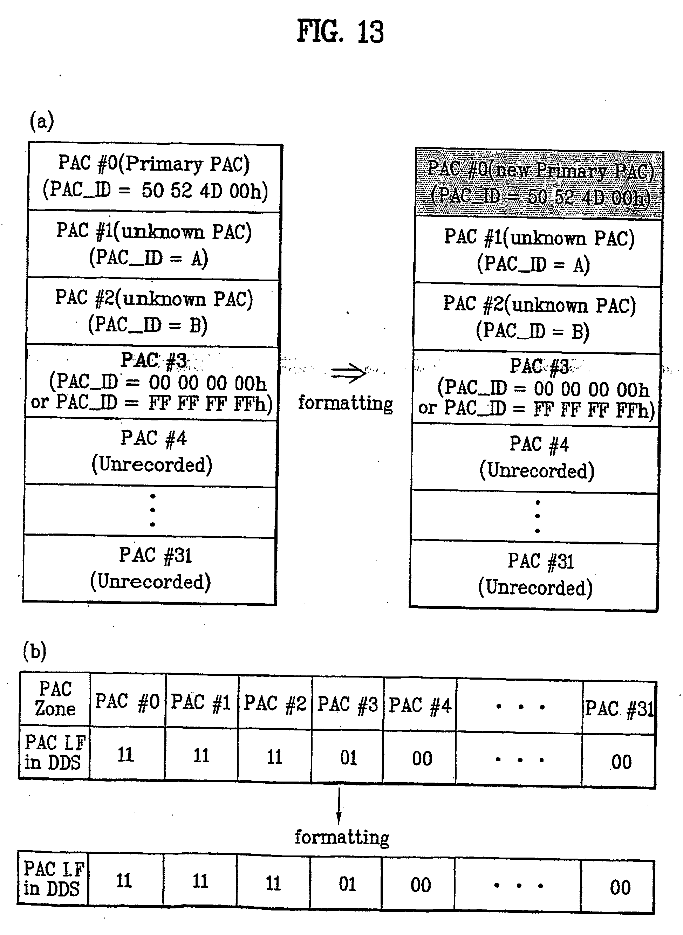

FIGs. 13A-13B illustrate a technique for initializing a PAC in accordance with another example embodiment of the present invention.

Referring to FIGS. 13A-13B, the "Known PAC" including the "Primary PAC" is initialized and the "unknown PAC" is left as is. As described, initialization of a "Primary PAC" which may be considered a type of "Known PAC" may be possible because the "Entire disc flag" may be set to "0" (discussed below).

When there is no "Primary PAC" on the disc, the disc may be initialized by setting the "PAC Update Count" field and the "Re-initialization Count" field to '0' at the "Primary PAC", to produce a new "Primary PAC". In this case, a Year/Month/Day of recording initialization may be recorded on the "Year/Month/Day of initial recording" field, and the recorder ID at the time of initialization may be recorded on the "Recorder ID for RID_Tag0 field.

If there is a "Primary PAC" on the disc, the new "Primary PAC" increments a "PAC Update Count" field value by one and sets the Year/Month/Day of recording initialization on the "Year/Month/Day of initial recording" field. Moreover, all the recorder ID lists recorded already are erased, and a recorder ID of initial recording may be recorded on the "Recorder ID for RID_Tag01" field, and the "Re-initialization Count" field may be incremented by one.

If the "Primary PAC" is initialized by an above method, while the "Unknown PAC" is left as is, all information on a valid PAC in the DDS remains intact, as shown in FIG. 13B.

An "Unknown PAC" may be left as is at the time of disc initialization because the PAC has information not only on the user area, but also other areas (for example, the DMA area, the spare area, the control data area, and/or other similar areas) on the disc. As a result, initialization leaving the "Unknown PAC" as is, regardless of user data, is possible.

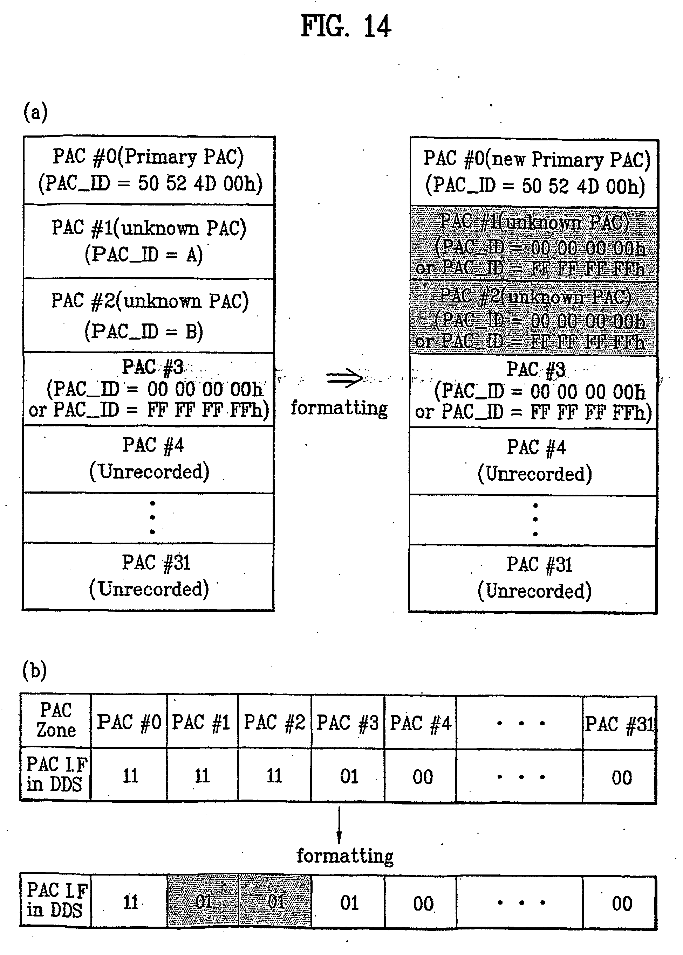

FIGs. 14A-14B illustrate a technique for initializing a PAC in accordance with another example embodiment of the present invention.

Referring to FIGs. 14A-14B, both the "Known PAC" and the "Unknown PAC" may be initialized, including the "Primary PAC".

Accordingly, referring to FIG. 14A, both an "Unknown PAC" with a PAC_ID = A (where "A" is an arbitrary designator), and an "Unknown PAC" with a PAC_ID = B (also an arbitrary designator) are initialized into next writable areas PAC_ID = 00 00 00 00h or PAC_ID = FF FF FF FFh. The "Primary PAC" may be initialized, for example, using the technique shown in FIGS. 13A-13B.

Referring to FIG 14B, bits 11 may be used to indicate a valid PAC of the "Unknown PAC" and PAC related information of the DDS may be changed to 01.

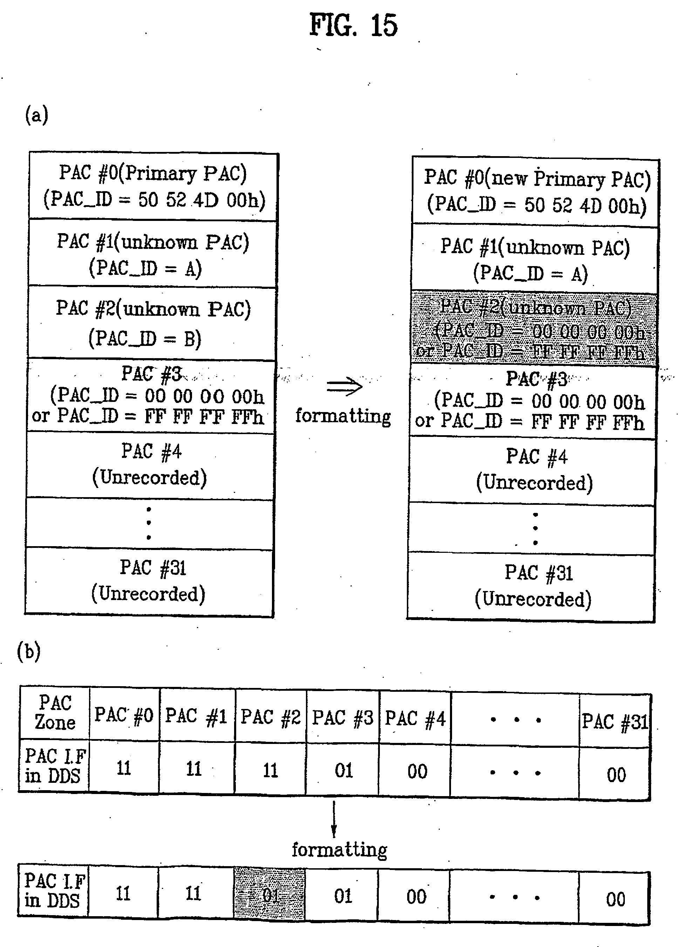

FIGS. 15A-15B illustrate a technique for initializing a PAC in accordance with another example embodiment of the present invention, Referring to FIGs. 15A-15B , similar to FIGs. 14A-14B, both the "Known PAC" and the "Unknown PAC" may be initialized, including the "Primary PAC", while accounting for bit b1 of the "Unknown PAC Rule" into account.

That is, as described above, if bit b1 of the "Unknown PAC Rule", a recording control bit for the PAC cluster area, is set to 1 (for example), to inhibit rewriting on the PAC cluster, initialization of the "Unknown PAC" is inhibited, and if bit b1 of the '"Unknown PAC Rule" is set to 0 (for example), to allow rewriting on the PAC cluster, initialization of the "Unknown PAC" is made possible.

Therefore, if it is desired to leave an "Unknown PAC" as is, regardless of the User data, it is possible to leave the "Unknown PAC" as is by using bits b1, and, for the "Unknown PAC" to be left as is, DDS information is left as 11 as a valid PAC.

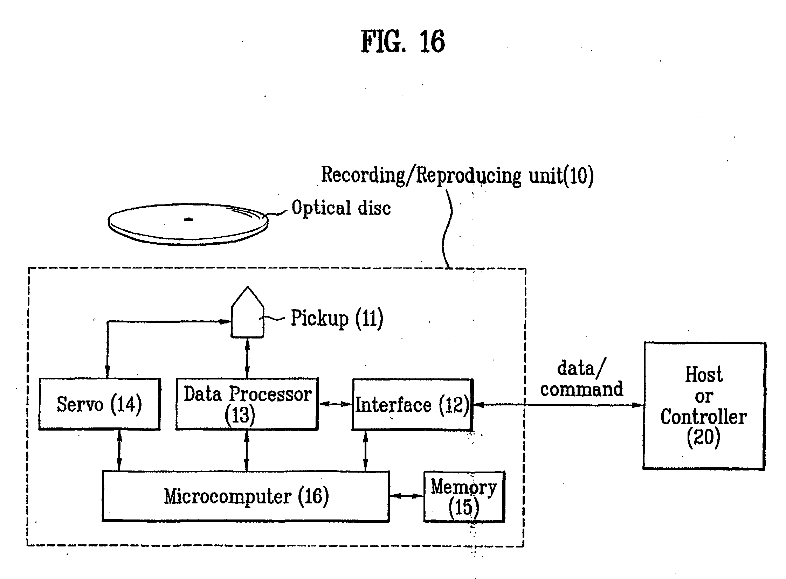

FIG 16 illustrates a block diagram of an optical recording/reproducing apparatus in accordance with an example embodiment of the present invention.

Referring to FIG. 16, the optical recording/reproducing apparatus may include a recording/reproducing device 10 for performing recording/reproduction on the optical disc and a host, or controller 20 for controlling the recording/reproducing device 10. In an example embodiment, the recording/reproducing device 10 may act as the "optical disc drive" discussed above in conjunction with many example embodiments of the present invention.

In an example embodiment, the host 20 gives a writing or reproduction instruction to write to or reproduce from a particular area of the optical disc to the recording/reproducing device 10, and the recording/reproducing device 10 performs the recording/reproduction to/from the particular area in response to the instruction from the host 20.

The recording/reproducing device 10 may further include an interface part 12 for performing communication, such as exchange of data and instructions with the host 20, a pickup part 11 I for writing/reading a data to/from the optical disc directly, a data processor 13 for receiving a signal from the pickup part 11 and recovering a desired signal value or modulating a signal to be written into a signal able to be written on the optical disc, a servo part 14 for controlling the pickup part 11 to read a signal from the optical disc accurately or to write a signal on the optical disc accurately, a memory 15 for temporary storage of various kinds of information including management information and data, and a microcomputer 16 for controlling various parts of the recording/reproducing device 10.

An example method for recording a PAC on a high density writable optical disc using the example optical recording/reproducing apparatus will be described below.

Upon inserting the optical disc into the optical recording/reproducing apparatus, management information may be read from the optical disc and stored in the memory 15 of the recording/reproducing device 10, for use at the time of recording/reproduction of the optical disc.

In this state, if the user desires to write on a particular area of the optical disc, the host 20, taking this as a writing instruction, provides information on a desired writing position to the recording/reproducing device 10, together with a data to be written.

The microcomputer 16 in the recording/reproducing device 10 may receive the writing instruction, determine if the area of the optical disc the host 20 desires to write is a defective area or not from the management information stored in the memory 15, and/or perform data writing according to the writing instruction from the host 20 on an area which is not a defective area.

If it is determined that writing on an entire disc or on a particular area of the disc includes new features which a previous version of the recording/reproducing device is not provided with, leading the previous version of the recording/reproducing device to fail to sense, or if it is intended to restrict functions, such as writing or reproducing to/from a particular area of the disc according to restriction set by the user, the microcomputer 16 of the recording/reproducing device 10 may write control information of the area in the PAC zone on the disc as an "Unknown PAC rule". The microcomputer 16 of the recording/reproducing device 10 may also write PAC information, such as the PAC_ID for a written state, and segment information which is control information on the particular area of the disc.

Moreover, the microcomputer 16 of the recording/reproducing device 10 may also write a PAC_ID and segment information on a particular area of the disc as PAC information. The recorder ID information may be recorded on the "Recorder ID for RID_Tag of the "Primary PAC".

PAC information may be written in a plurality of valid PACs on the PAC 1 zone of the INFO 1 zone as required at a one cluster size and a copy of the PAC recorded on the PAC1 zone may be written on the PAC2 zone of the INFO 2 zone as a backup.

The microcomputer 16 may provide position information of the area the data is written thereon, or the PAC zone, and the data to the servo 14 and the data processor 13, so that the writing is finished at a desired position on the optical disc through the pickup part 11.

Initialization of a high density optical disc having a PAC recorded thereon by the above-described method may be performed as described above under the control of the microcomputer 16 of the recording and reproducing device 10. In an example embodiment an "Unknown PAC" may be initialized when a cluster having the PAC recorded thereon is writable and initialization of the "Primary PAC" of the "Known PAC" may be made by recording information on a recorder ID and date of the initialization, and updating related count information.

In another example embodiment, a method for recording to and/or reproducing from a high density optical disc having a PAC written thereon will be described.

Upon inserting an optical disc into the optical recording/reproducing apparatus, management information may be read from the optical disc and stored in the memory 15 of the recording and reproducing device 10, for use at the time of recording and reproduction of the optical disc.

The information in the memory 10 may include position information of various zones included in the PAC zone on the disc. Particularly, positions of valid PACs in the PAC zone maybe known from disc definition structure (DDS) information. After positions of the valid PACs are known, a PAC_ID field of the PAC may be examined, for verifying if the PAC_ID is an identifiable PAC_ID.

If the PAC_ID is identifiable, the method determines that a recording and reproducing device having written the data on the disc has a version identical to a version of the present recording and reproducing device or there are no separate writing/reproduction restrictions, and the recording/reproduction is performed according to the instruction from the host 20.

If the PAC_ID is not identifiable, determining that it is a case when there are recording and reproducing restrictions for entire disc or a segment area, the recording/reproduction may be performed according to an instruction from the host 20 from with reference to recording/reproduction restriction areas on the disc written as the "Unknown PAC rule" and/or the "Segment".

The microcomputer 16 may then provide the location information and data according to the instruction from the host to the servo 14 and the data-processor 13, so that the recording/reproduction is finished at a desired location on the optical disc through the pickup part 11.

As described above, the methods and apparatus for recording and reproducing in a high density optical disc according to example embodiments of the present invention may have one or more of the following advantages.

First, the various embodiments of updating a PAC zone and DDS information related thereto permits effective initialization of a high density optical disc.

Second, various embodiments for recording/reproducing data using a PAC permits effective data recording/reproduction to/from a high density optical disc.

## Claims

1. A rewritable recording medium including a plurality of recording layers, each recording layer comprising:
a data area;
the physical access control information controlling an access to the recording medium, the physical access control information specifying a plurality of segments in the data area, the PAC cluster including a PAC identification field, PAC rules and update information, the PAC identification field providing an identification code of the PAC cluster, the PAC rules designating applicable operations of a drive that cannot recognize the identification code of the PAC cluster when the drive attempts to access to the recording medium, the update information indicating the number of times the PAC cluster has been updated by initializing the physical access control information area;
a backup PAC area storing a copy of the physical access control information; and
at least one status information area storing status information of the physical access control information, the status information indicating a status of each of the PAC clusters as unrecorded, available for re-use, invalid or valid,
wherein the status information is changed upon initializing the physical access control information area, the status information being changed to indicate that the at least one PAC cluster which was valid prior to initializing is available for re-use after initializing.

2. The recording medium of claim 1, wherein the at least one physical access control information area and the at least one status information area of each recording layer are located in an inner area of the recording medium.

3. The recording medium of claim 1, wherein the starting and ending positions of the segments are designated at boundaries of clusters within the data area.

4. The recording medium of claim 1, wherein the backup PAC area is located in the inner area.

5. The recording medium of claim 1, wherein total number of the segments included in the data area is less or equal to a maximum number.

6. A method of controlling an access to a rewritable recording medium having a plurality of recording layers and at least one physical access control information area including at least one PAC cluster, the PAC cluster storing physical access control information, comprising:
reading status information for the physical access control information from a status information area, the status information indicating a status of each of the PAC clusters as unrecorded, available for re-use, invalid or valid, the status information being changed upon initializing of the recording medium in each recording layer, the status information being changed to indicate that the at least one PAC cluster which was valid prior to initializing is available for re-use after initializing; and
reading at least one of the physical access control information and a copy of the physical access control information, the physical access control information being read from the at least one physical access control information area including at least one PAC cluster, the copy of the physical access control information being read from a backup PAC area of the recording medium, the physical access control information controlling an access to the recording medium, the physical access control information specifying at plurality of segments in a data area of the recording medium, the PAC cluster including a PAC identification field, PAC rules and update information, the PAC identification field providing an identification code of the PAC cluster, the PAC rules designating applicable operations of a drive that cannot recognize the identification code of the PAC cluster when the drive attempts to access to the recording medium, the update information indicating the number of times the PAC cluster has been updated by initializing the physical access control information area.

7. The method of claim 6, wherein total number of the segments included in the data area is less or equal to a maximum number.

8. The method of claim 6, wherein the starting and ending positions of the segments are designated at boundaries of clusters within the data area.

9. An apparatus for controlling an access to a rewritable recording medium having a plurality of recording layers and at least one physical access control information area including at least one PAC cluster, the PAC cluster storing physical access control information, comprising:
a pickup(11) configured to read data recorded on the recording medium; and
a controller(16) configured to control the pickup(11) to read status information for the physical access control information from a status information area, the status information indicating a status of each of the PAC clusters as unrecorded, available for re-use, invalid or valid, the status information being changed upon initializing of the recording medium, the status information being changed to indicate that the at least one PAC cluster which was valid prior to initializing is available for re-use after initializing, and the controller(16) configured to control the pickup(11) to read at least one of the physical access control information and a copy of the physical access control information, the physical access control information being read from the at least one physical access control information area including at least one PAC cluster, the copy of the physical access control information being read from a backup PAC area of the recording medium, the physical access control information controlling an access to the recording medium, the physical access control information specifying a plurality of segments in a data area of the recording medium, the PAC cluster including a PAC identification field, PAC rules and update information , the PAC identification field providing an identification code of the PAC cluster, the PAC rules designating applicable operations of a drive that cannot recognize the identification code of the PAC cluster when the drive attempts to access to the recording medium, the update information indicating the number of times the PAC cluster has been updated by initializing the physical access control information area.

10. The apparatus of claim 9, wherein total number of the segments included in the data area is less or equal to a maximum number.

11. The apparatus of claim 9, wherein the pickup accesses to the recording medium according to the PAC rules when the apparatus cannot know the physical access control information.

## Patentansprüche

1. Wiederbeschreibbares Aufzeichnungsmedium mit mehreren Aufzeichnungsschichten, wobei jede Aufzeichnungsschicht aufweist:
einen Datenbereich;
wenigstens einen physikalischen Zugriffssteuerungsinformationsbereich, der wenigstens einen PAC-Cluster aufweist, wobei der PAC-Cluster physikalische Zugriffssteuerungsinformationen speichert, wobei die physikalischen Zugriffssteuerungsinformationen einen Zugriff auf das Aufzeichnungsmedium steuern, wobei die physikalischen Zugriffssteuerungsinformationen mehrere Segmente in dem Datenbereich spezifizieren, wobei der PAC-Cluster ein PAC-Kennungsfeld, PAC-Regeln und Aktualisierungsinformationen aufweist, wobei das PAC-Kennungsfeld einen Kennungscode des PAC-Clusters bestimmt, die PAC-Regeln anwendbare Operationen eines Laufwerks bezeichnen, das den Kennungscode des PAC-Clusters nicht erkennen kann, wenn das Laufwerk versucht, auf das Aufzeichnungsmedium zuzugreifen, wobei die Aktualisierungsinformationen die Anzahl der Male umfassen, die der PAC-Cluster aktualisiert wurde, indem der physikalische Zugriffssteuerungsinformationsbereich initialisiert wurde;
eine Datensicherungs-PAC-Zone, die eine Kopie der physikalischen Zugriffssteuerungsinformationen speichert; und
wenigstens einen Statusinformationsbereich, der Statusinformationen der physikalischen Zugriffssteuerungsinformationen speichert, wobei die Statusinformationen einen Status jedes der PAC-Cluster als unaufgezeichnet, für die Wiederverwendung verfügbar, ungültig oder gültig anzeigen,
wobei die Statusinformationen nach der Initialisierung des physikalischen Zugriffssteuerungsinformationsbereichs geändert werden, wobei die Statusinformationen geändert werden, um anzuzeigen, dass der wenigstens eine PAC-Cluster, der vor der Initialisierung gültig war, nach der Initialisierung für die Wiederverwendung verfügbar ist.

2. Aufzeichnungsmedium nach Anspruch 1, wobei der wenigstens eine physikalische Zugriffssteuerungsinformationsbereich und der wenigstens eine Statusinformationsbereich jeder Aufzeichnungsschicht sich in einem Innenbereich des Aufzeichnungsmediums befinden.

3. Aufzeichnungsmedium nach Anspruch 1, wobei die Start- und Endpositionen der Segmente an Grenzen der Cluster innerhalb des Datenbereichs bestimmt sind.

4. Aufzeichnungsmedium nach Anspruch 1, wobei der Sicherungs-PAC-Bereich sich in dem Innenbereich befindet.

5. Aufzeichnungsmedium nach Anspruch 1, wobei die Gesamtzahl der in dem Datenbereich enthaltenen Segmente kleiner oder gleich einer Maximalzahl ist.

6. Verfahren zur Steuerung eines Zugriffs auf ein wiederbeschreibbares Aufzeichnungsmedium mit mehreren Aufzeichnungsschichten und wenigstens einem physikalischen Zugriffssteuerungsinformationsbereich, der wenigstens einen PAC-Cluster aufweist, wobei der PAC-Cluster physikalische Zugriffssteuerungsinformationen speichert, das aufweist:
Lesen von Statusinformationen für die physikalischen Zugriffssteuerungsinformationen aus einem Statusinformationsbereich, wobei die Statusinformationen einen Status jedes PAC-Clusters als unaufgezeichnet, für die Wiederverwendung verfügbar, ungültig oder gültig anzeigen, wobei die Statusinformationen nach der Initialisierung des Aufzeichnungsmediums in jeder Aufzeichnungsschicht geändert werden, wobei die Statusinformationen geändert werden, um anzuzeigen, dass wenigstens ein PAC-Cluster, der vor der Initialisierung gültig war, nach der Initialisierung für die Wiederverwendung verfügbar ist; und
Lesen der physikalischen Zugriffssteuerungsinformationen und/oder einer Kopie der physikalischen Zugriffssteuerungsinformationen, wobei die physikalischen Zugriffssteuerungsinformationen aus dem wenigstens einen physikalischen Zugriffssteuerungsbereich einschließlich des wenigstens einen PAC-Clusters gelesen werden, wobei die Kopie der physikalischen Zugriffssteuerungsinformationen aus einem Sicherungs-PAC-Bereich des Aufzeichnungsmediums gelesen wird, wobei die physikalischen Zugriffssteuerungsinformationen einen Zugriff auf das Aufzeichnungsmedium steuern, wobei die physikalischen Zugriffssteuerungsinformationen mehrere Segmente in einem Datenbereich des Aufzeichnungsmediums spezifizieren, wobei der PAC-Cluster ein PAC-Kennungsfeld, PAC-Regeln und Aktualisierungsinformationen umfasst, wobei das PAC-Kennungsfeld einen Kennungscode des PAC-Clusters bereitstellt, die PAC-Regeln anwendbare Operationen eines Laufwerks bezeichnen, das den Kennungscode des PAC-Clusters nicht erkennen kann, wenn das Laufwerk versucht, auf das Aufzeichnungsmedium zuzugreifen, wobei die Aktualisierungsinformationen die Anzahl der Male umfassen, die der PAC-Cluster aktualisiert wurde, indem der physikalische Zugriffssteuerungsinformationsbereich initialisiert wurde.

7. Verfahren nach Anspruch 6, wobei die Gesamtzahl der in dem Datenbereich enthaltenden Segmente kleiner oder gleich einer Maximalzahl ist.

8. Verfahren nach Anspruch 6, wobei die Start- und Endpositionen der Segmente an Grenzen der Cluster innerhalb des Datenbereichs bestimmt sind.

9. Vorrichtung zum Steuern eines Zugriffs auf ein wiederbeschreibbares Aufzeichnungsmedium mit mehreren Aufzeichnungsschichten und wenigstens einem physikalischen Zugriffssteuerungsinformationsbereich, der wenigstens einen PAC-Cluster aufweist, wobei der PAC-Cluster physikalische Zugriffssteuerungsinformationen speichert, die aufweist:
eine Abtasteinrichtung (11), die konfiguriert ist, um auf dem Aufzeichnungsmedium aufgezeichnete Daten zu lesen; und
eine Steuerung (16), die konfiguriert ist, um die Abtasteinrichtung (11) zu steuern, um Statusinformationen für die physikalischen Zugriffssteuerungsinformationenaus einem Statusinformationsbereich zu lesen, wobei die Statusinformationen einen Status jedes der PAC-Cluster als unaufgezeichnet, für die Wiederverwendung verfügbar, ungültig oder gültig anzeigen, wobei die Statusinformationen nach der Initialisierung des physikalischen Zugriffssteuerungsinformationsbereichs geändert werden, wobei die Statusinformationen geändert werden, um anzuzeigen, dass der wenigstens eine PAC-Cluster, der vor der Initialisierung gültig war, nach der Initialisierung für die Wiederverwendung verfügbar ist, und wobei die Steuerung (16) konfiguriert ist, um die Abtasteinrichtung (11) zu steuern, um die physikalischen Zugriffssteuerungsinformationen und/oder eine Kopie der physikalischen Zugriffssteuerungsinformationen zu lesen, wobei die physikalischen Zugriffssteuerungsinformationen aus dem wenigstens einen physikalischen Zugriffssteuerungsbereich einschließlich des wenigstens einen PAC-Clusters gelesen werden, wobei die Kopie der physikalischen Zugriffssteuerungsinformationen aus einem Sicherungs-PAC-Bereich des Aufzeichnungsmediums gelesen wird, wobei die physikalischen Zugriffssteuerungsinformationen einen Zugriff auf das Aufzeichnungsmedium steuern, wobei die physikalischen Zugriffssteuerungsinformationen mehrere Segmente in einem Datenbereich des Aufzeichnungsmediums spezifizieren, wobei der PAC-Cluster ein PAC-Kennungsfeld, PAC-Regeln und Aktualisierungsinformationen umfasst, wobei das PAC-Kennungsfeld einen Kennungscode des PAC-Clusters bereitstellt, die PAC-Regeln anwendbare Operationen eines Laufwerks bezeichnen, das den Kennungscode des PAC-Clusters nicht erkennen kann, wenn das Laufwerk versucht, auf das Aufzeichnungsmedium zuzugreifen, wobei die Aktualisierungsinformationen die Anzahl der Male umfassen, die der PAC-Cluster aktualisiert wurde, indem der physikalische Zugriffssteuerungsinformationsbereich initialisiert wurde.

10. Vorrichtung nach Anspruch 9, wobei die Gesamtzahl der in dem Datenbereich enthaltenden Segmente kleiner oder gleich einer Maximalzahl ist.

11. Vorrichtung nach Anspruch 9, wobei die Abtasteinrichtung gemäß den PAC-Regeln auf das Aufzeichnungsmedium zugreift, wenn die Vorrichtung die physikalischen Zugriffssteuerungsinformationen nicht kennen kann.

## Revendications

1. Support d'enregistrement réinscriptible qui comprend une pluralité de couches d'enregistrement, chaque couche d'enregistrement comprenant :
une zone de données ;
au moins une zone d'informations de contrôle d'accès physique qui comprend au moins une grappe PAC, ladite grappe PAC stockant des informations de contrôle d'accès physique, des informations de contrôle d'accès physique commandant un accès audit support d'enregistrement, lesdites informations de contrôle d'accès physique spécifiant une pluralité de segments dans ladite zone de données, une grappe PAC comprenant un champ d'identification PAC, des règles PAC et des informations de mise à jour, ledit champ d'identification PAC fournissant un code d'identification de la grappe PAC, lesdites règles PAC désignant les opérations applicables d'un lecteur qui ne parvient pas à reconnaître le code d'identification de la grappe PAC lorsque le lecteur tente d'accéder au support d'enregistrement, lesdites informations de mise à jour indiquant le nombre de fois où ladite grappe PAC a été mise à jour en reformatant la zone d'informations de contrôle d'accès physique ;
une zone PAC de secours qui stocke une copie desdites informations de contrôle d'accès physique ; et
au moins une zone d'informations d'état qui stocke les informations d'état desdites informations de contrôle d'accès physique, lesdites informations d'état indiquant un état de chacune des grappes PAC comme non enregistrée, disponible en vue de sa réutilisation, non valide, ou valide,
les informations d'état étant modifiées lors du reformatage de ladite zone d'informations de contrôle d'accès physique, lesdites informations d'état étant changées afin d'indiquer que ladite au moins une grappe PAC qui était valide avant le reformatage est définie de manière à être disponible en vue de sa réutilisation, après reformatage.

2. Support d'enregistrement selon la revendication 1, dans lequel ladite au moins une zone d'informations de contrôle d'accès physique et ladite au moins une zone d'informations d'état de chaque couche d'enregistrement sont situées dans une zone interne dudit support d'enregistrement.

3. Support d'enregistrement selon la revendication 1, dans lequel les positions de début et de fin des segments sont désignées au niveau de frontières de grappes au sein de la zone de données.

4. Support d'enregistrement selon la revendication 1, dans lequel ladite zone PAC de secours est située dans ladite zone interne.

5. Support d'enregistrement selon la revendication 1, dans lequel le nombre total des segments dans la zone de données est inférieur ou égal à un nombre maximum.

6. Procédé de contrôle d'accès à un support d'enregistrement réinscriptible qui comprend une pluralité de couches d'enregistrement et au moins une zone d'informations de contrôle d'accès physique qui comprend au moins une grappe PAC, ladite grappe PAC stockant des informations de contrôle d'accès physique, qui comprend :
la lecture d'informations d'état pour lesdites informations de contrôle d'accès physique, depuis une zone d'informations d'état, lesdites informations d'état indiquant un état de chaque grappe PAC au sein d'une zone PAC comme non enregistrée, disponible en vue de sa réutilisation, non valide ou valide, lesdites informations d'état étant changées lors du reformatage dudit support d'enregistrement dans chaque couche d'enregistrement, lesdites informations d'état étant changées afin d'indiquer que ladite au moins une grappe PAC qui était valide avant le reformatage est définie de manière à être disponible en vue de sa réutilisation, après reformatage ; et
la lecture d'au moins l'une desdites informations de contrôle d'accès physique et d'une copie desdites informations de contrôle d'accès physique, lesdites informations de contrôle d'accès physique étant lues depuis ladite zone d'informations de contrôle d'accès physique qui comprend au moins une grappe PAC, ladite copie desdites informations de contrôle d'accès physique étant lue depuis une zone PAC de secours dudit support d'enregistrement, lesdites informations de contrôle d'accès physique commandant un accès audit support d'enregistrement, lesdites informations de contrôle d'accès physique spécifiant une pluralité de segments dans une zone de données dudit support d'enregistrement, ladite grappe PAC comprenant un champ d'identification PAC, des règles PAC et des informations de mise à jour, ledit champ d'identification PAC fournissant un code d'identification de ladite grappe PAC, lesdites règles PAC désignant les opérations applicables d'un lecteur qui ne parvient pas à reconnaître le code d'identification de ladite grappe PAC lorsque le lecteur tente d'accéder au support d'enregistrement, lesdites informations de mise à jour indiquant le nombre de fois où ladite grappe PAC a été mise à jour en reformatant la zone d'informations de contrôle d'accès physique.

7. Procédé selon la revendication 6, dans lequel le nombre total de segments inclus dans ladite zone de données est inférieur ou égal à un nombre maximum.

8. Procédé selon la revendication 6, dans lequel les positions de début et de fin des segments sont désignées au niveau de frontières de grappes au sein de la zone de données.

9. Appareil de commande d'un accès un support d'enregistrement réinscriptible sui comprend une pluralité de couches d'enregistrement et au moins une zone d'informations de contrôle d'accès physique qui comprend au moins une grappe PAC, ladite grappe PAC stockant des informations de contrôle d'accès physique, qui comprend :
un capteur (11) configuré de manière à lire des données à partir d'un support d'enregistrement ; et
un contrôleur (16) configuré de manière à commander au capteur (11) de lire des informations d'état pour lesdites informations de contrôle d'accès physique à partir d'une zone d'informations d'état, les informations d'état indiquant un état de chaque grappe PAC comme non enregistrée, disponible en vue de sa réutilisation, non valide ou valide, les informations d'état étant modifiées lors du reformatage du support d'enregistrement, les informations d'état étant modifiées afin d'indiquer que ladite grappe PAC qui était valide avant le reformatage est disponible en vue de sa réutilisation, après reformatage, et ledit contrôleur (16) étant configuré de manière à commander au capteur (11) de lire au moins l'une des informations de contrôle d'accès physique et une copie des informations de contrôle d'accès physique, lesdites informations de contrôle d'accès physique étant lues à partir d'au moins une zone d'informations de contrôle d'accès physique qui comprend au moins une grappe PAC, ladite copie desdites informations de contrôle d'accès physique étant lue depuis une zone PAC de secours dudit support d'enregistrement, lesdites informations de contrôle d'accès physique commandant un accès audit support d'enregistrement, lesdites informations de contrôle d'accès physique spécifiant une pluralité de segments dans une zone de données dudit support d'enregistrement, ladite grappe PAC comprenant un champ d'identification PAC, des règles PAC et des informations de mise à jour, ledit champ d'identification PAC fournissant un code d'identification de ladite grappe PAC, lesdites règles PAC désignant les opérations applicables d'un lecteur qui ne parvient pas à reconnaître le code d'identification de ladite grappe PAC lorsque le lecteur tente d'accéder au support d'enregistrement, lesdites informations de mise à jour indiquant le nombre de fois où ladite grappe PAC a été mise à jour en reformatant la zone d'informations de contrôle d'accès physique.

10. Appareil selon la revendication 9, dans lequel le nombre total de segments inclus dans ladite zone de données est inférieur ou égal à un nombre maximum.

11. Appareil selon la revendication 9, dans lequel ledit capteur accède audit support d'enregistrement selon lesdites règles PAC lorsque l'appareil ne peut pas connaître lesdites informations de contrôle d'accès physique.
